(19) Europäisches Patentamt
European Patent Office
Office européen des brevets

(11) **EP 4 404 428 A1**

(12) **EUROPEAN PATENT APPLICATION**

(43) Date of publication:
**24.07.2024  Bulletin 2024/30**

(51) International Patent Classification (IPC):
*H02J 50/12* (2016.01)    *H02J 7/00* (2006.01)
*H02M 7/219* (2006.01)    *H02M 7/797* (2006.01)

(21) Application number: **23152435.6**

(22) Date of filing: **19.01.2023**

(52) Cooperative Patent Classification (CPC):
**H02J 50/12; H02J 7/00; H02M 1/007; H02M 7/219**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **PULS GmbH
81925 München (DE)**

(72) Inventor: **TRITSCHLER, Johannes
79258 Hartheim (DE)**

(74) Representative: **Hoffmann Eitle
Patent- und Rechtsanwälte PartmbB
Arabellastraße 30
81925 München (DE)**

Remarks:
Amended claims in accordance with Rule 137(2)
EPC.

(54) **FULLBRIDGE HALFBRIDGE CONFIGURATION**

(57)    The present invention provides a wireless power transmission system having capability to supply mobile side DC load voltages at a plurality of voltage levels at minimized system manufacturing costs. An adaptive mobile side rectifier circuit operates in a full bridge rectifying mode or a half bridge rectifying mode depending on the voltage level of a mobile side load voltage to be supplied.

A rectifying mode controller switches to the full bridge rectifying mode during supply of the mobile side load voltage at a lower load voltage level and switches to the half bridge rectifying mode during supply of the mobile load voltage at a higher load voltage level. The present invention also relates to a method of controlling the adaptive mobile side rectifier circuit.

Fig. 5

**Description**

FIELD OF INVENTION

The present invention relates to adaptive mobile side rectification in a wireless power transmission system, in particular to an adaptive mobile side rectifying circuit converting a mobile side AC voltage into a DC load voltage with respect to a plurality of voltage levels and to a related control method.

BACKGROUND OF INVENTION

Generally, wireless power transmission systems have a number of advantages over conductive power transmission systems. E.g., for electric vehicles it means that a plugging of a cable is no longer required.

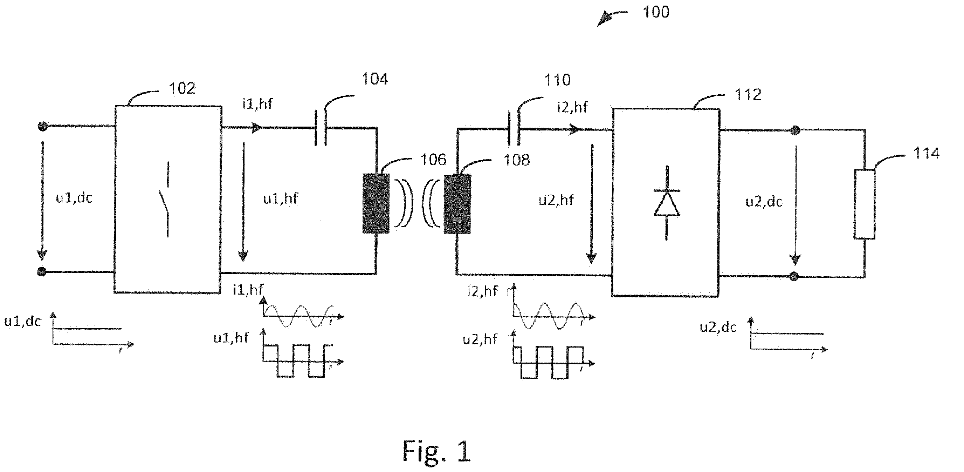

Fig. 1 shows a schematic diagram of a wireless power transmission system 100 using series-series compensation as known in the art.

Generally, wireless power transmission systems are widely used for supply of electric power to mobile vehicles/batteries. Here, it should be noted that the present invention to be described in the following is not restricted to any type of compensation and that any other type of compensation compared to series-series compensation is applicable as well, e.g., series-parallel compensation, parallel-parallel-compensation, LCC-LCC-compensation, etc.

As shown in Fig. 1, the wireless power transmission system 100 comprises at a stationary side a DC/AC converter 102, a stationary side compensation capacitor 104, and a transmitter coil 106 connected in series to the stationary side compensation capacitor 104. The series connection of the stationary side compensation capacitor 104 and the transmitter coil 106 is connected to the output side of the DC/AC converter 102.

As shown in Fig. 1, the wireless power transmission system 100 comprises at a mobile side a receiver coil 108 connected in series to a mobile side compensation capacitor 110. The series connection of the receiver coil 108 and the mobile side compensation capacitor 110 is connected to an input side of a mobile side AC/DC converter 112. At the output of the mobile side AC/DC converter 112 there is connected a load 114.

Operatively, the stationary side DC/AC converter 102 is adapted to receive a DC input signal and further adapted to convert the DC input signal into a stationary side AC signal. The stationary side AC signal is output to the series connection of the stationary side compensation capacitor 104 and the transmitter coil 106 for generation of an oscillating magnetic field. Then, a stationary side controller is adapted to measure the characteristics of the stationary side AC signal and optionally the DC input signal for control of the stationary side DC/AC converter 102.

In more detail, the stationary side controller is adapted to control the stationary side DC/AC converter 102 such that the generated magnetic field oscillates at a resonant frequency of the series connection of the stationary side compensation capacitor 104 and the transmitter coil 106.

Operatively, the receiver coil 108, when placed in the magnetic field produced by the transmitter coil 106, receives energy transmitted by the transmitter coil 106 through inductive coupling. The inductive coupling leads to the generation of a mobile side AC input signal. Under control of a mobile side controller the mobile side AC/DC converter 112 is adapted to convert the mobile side AC input signal into a mobile side DC load signal which is then output to the load 114.

As shown in Fig. 1, at the mobile side a mobile side rectifying circuit 112 is used to convert the received mobile side AC input signal in the frequency range of, e.g., kHz or MHz. In more detail a mobile side AC current $I_{2,hf}$ and mobile side AC voltage $U_{2,hf}$ are converted into DC signals $I_{2,dc}$ and $U_{2,dc}$, optionally filtered with a capacitor and then output to charge a battery with a DC current or to supply a load with DC power.

Further, the mobile side rectifier circuit may be realized as a full bridge rectifying circuit, a half bridge rectifying circuit, a voltage doubler circuit, a center tapped rectifying circuit or similar. Also, the mobile side rectifying circuit may be a passive rectifying circuit, an active rectifying circuit or a semi active/passive rectifying circuit.

However, irrespective of the type of realization of the mobile side rectifying circuit today the design of wireless power transmission systems is optimized with respect to a predetermined, specified DC load voltage. Then, should the wireless power transmission system supply a plurality of DC load voltage levels this implies that circuit components, both, at the stationary and at the mobile side of the wireless power transmission system are dimensioned according to the largest envisaged DC load voltage level.

While this approach is a safeguard for operation at the largest DC load voltage level it implies an over dimensioning of the overall circuitry with respect to lower DC load voltage levels and thus a waste of hardware resources in combination with increased wireless power transmission system manufacturing costs.

Also, while US 2011/285349 A1 discloses a change of mobile side rectifying mode in a wireless power transmission system from a full bride mode to a half bride mode when a coupling coefficient threshold of a coil set-up is exceeded, nevertheless, there is no consideration of variations in DC load voltage levels in the sense outlined above and consequently no indication towards the technical problems addressed by the present invention.

SUMMARY OF INVENTION

In view of the above, the object of the present invention is to provide a wireless power transmission system having capability to supply DC load voltages at a plurality of voltage levels at minimized wireless power transmission system manufacturing costs.

According to a first aspect of the present invention this object is achieved by a mobile side rectifying module operated in a wireless power transmission system for conversion of an mobile side AC input voltage into a mobile side DC load voltage either at a first load voltage level or at a second load voltage level. Here, the second load voltage level is higher than the first load voltage level.

According to the first aspect of the present invention the mobile side rectifying module comprises an adaptive mobile side rectifying circuit adapted to operate according to a rectifying mode being either a full bridge rectifying mode or a half bridge rectifying mode.

Further, according to the first aspect of the present invention the mobile side rectifying module comprises a rectifying mode controller adapted to switch the rectifying mode of the adaptive mobile side rectifying circuit to the full bridge rectifying mode when the mobile side rectifier module is to supply the DC load voltage at the first load voltage level. Also, the rectifying mode controller is adapted to switch the rectifying mode of the adaptive mobile side rectifying circuit to the half bridge rectifying mode when the mobile side rectifier module is to supply the DC load voltage at the second load voltage level.

According to a second aspect of the present invention the object outlined above is achieved by a method of controlling an adaptive mobile side rectifying circuit being operated in a wireless power transmission system for conversion of a mobile side AC input voltage into a mobile side DC load voltage either at a first load voltage level or at a second load voltage level. Again, without restricting scope of protection the second load voltage level is assumed to be higher than the first load voltage level.

According to the second aspect of the present invention the method comprises a first step switching a rectifying mode of the adaptive mobile side rectifying circuit to a full bridge rectifying mode when the adaptive mobile side rectifying circuit is to supply the mobile side DC load voltage at the first load voltage level.

Further, according to the second aspect of the present invention the method comprises a second step of switching the rectifying mode of the adaptive mobile side rectifier circuit to a half bridge rectifying mode when the adaptive mobile side rectifying circuit is to supply the mobile DC load voltage at the second load voltage level.

BRIEF DESCRIPTION OF DRAWING

In the following the present invention will be described with reference to the drawing in which:

Fig. 1    shows a schematic diagram of a wireless power transmission system using series-series compensation as known in the art;

Fig. 2    shows a schematic diagram of a mobile side rectifying module according to the present invention;

Fig. 3    shows a voltage $U_{FB}$ at the input side of the mobile side rectifying module upon operation thereof in the full bride rectifying mode;

Fig. 4    shows a voltage $U_{HB}$ at the input side of the mobile side rectifying module upon operation hereof in the half bride rectifying mode;

Fig. 5    shows a further detailed schematic diagram of the mobile side rectifying module according to the present invention;

Fig. 6    shows a change of the mobile side rectifying mode over time in relation to a change of a mobile side load voltage from a higher load voltage value $V_2$ to a lower load voltage value $V_1$ and vice versa;

Fig. 7    shows further aspects for a change of the mobile side rectifying mode over time in relation to a change of a mobile side load voltage from a higher load voltage value $V_2$ to a lower load voltage value $V_1$ and vice versa;

Fig. 8    shows a flowchart of operation for the mobile side rectifying module shown in Fig. 5;

Fig. 9    shows a schematic diagram of a first adaptive mobile side rectifying circuit adapted to operate according to full bridge rectifying mode or a half bridge rectifying mode;

Fig. 10   shows further detailed schematic diagrams of a dedicated full bridge rectifying circuit and of a dedicated half bridge rectifying circuit for application in the first adaptive mobile side rectifying circuit shown in Fig. 9;

Fig. 11   shows a schematic diagram of a second adaptive mobile side rectifying circuit adapted to operate according to a full bridge rectifying mode or a half bridge rectifying mode;

Fig. 12   shows details of operation for the mobile side rectifying module shown in Fig. 5 when the relation $V_2 = 2V_1$ applies;

Fig. 13   shows a voltage $U_{FB}$ at the input side of the adaptive mobile side rectifying circuit shown in Fig. 12 upon operation thereof in the full bride rectifying mode;

Fig. 14   shows a voltage $U_{HB}$ at the input side of the mobile side rectifying module shown in Fig. 12 upon operation thereof in the half bridge rectifying mode;

Fig. 15   shows a schematic diagram of a third adaptive mobile side rectifying circuit being an asymmetric half-controlled rectifying circuit adapted to operate according to a full bridge rectifying mode or a half bridge rectifying mode;

Fig. 16   shows a schematic diagram of a fourth adaptive mobile side rectifying circuit being a fully-controlled rectifying circuit adapted to operate according to a full bridge rectifying mode or a half bridge rectifying mode;

Fig. 17   shows details of operation in the full bridge operation mode for the third and fourth adaptive mobile side rectifying circuit shown in Fig. 15 and Fig. 16; and

Fig. 18   shows details of operation in the half bridge operation mode for the third and fourth adaptive mobile side rectifying circuit shown in Fig. 15 and Fig. 16.

DETAILED DESCRIPTION

In the following the present invention will be explained in detail with reference to the drawing. Here, it should be understood that such explanation is related to examples of the present invention only and not binding to the scope of the present invention as defined by the claims. As far as reference is made to specific circuit components this is to be considered as example for the underlying functionality such the circuit components are clearly exchangeable as long as the same functionality is achieved.

In the following a general outline of the technological basis of the present invention will be given with respect to operational characteristics of wireless power transmission systems. Here, with respect to a series-series compensated or LCC-LCC compensated wireless power transmission systems at or near the resonant frequency $\omega = 1/\sqrt{LC}$ the relations between the high frequency currents and voltages can be simplified to:

$$I_{1,hf} = \frac{U_{2,hf}}{\omega \cdot L_m}$$

$$I_{2,hf} = \frac{U_{1,hf}}{\omega \cdot L_m}.$$

Further, irrespective of operatively different load voltages levels of the mobile side load/mobile battery the current at the stationary side of the wireless power transmission system may approximated for a given range of $L_m$ by

$$I_{1,hf}(U_{2,hf}) = \frac{U_{2,hf}}{\omega \cdot L_m}.$$

From the above, the maximum of $I_{1,hf}$ is

$$I_{1,hf_{max}}(U_{2,hf}) = \frac{U_{2,hf}}{\omega \cdot L_{m\_min}}$$

$$U_{2,hf} = \frac{2 \cdot \sqrt{2} \cdot U_{2,dc}}{\pi}.$$

Further, e.g., in a wireless power transmission system being designed for $U_{2,dc} = V$ the following relation applies:

$$I_{1,hf_{max}}(V) = \frac{\frac{2 \cdot \sqrt{2} \cdot U_{2,dc}}{\pi}}{\omega \cdot L_{m\_min}} = \frac{\frac{2 \cdot \sqrt{2} \cdot V}{\pi}}{\omega \cdot L_{m\_min}}.$$

From the above, for a given battery voltage and a given $L_m$-range of a given pair of power transmission coils the maximum current on the stationary side $I_{1,hf}$ may be determined. This is achieved by dimensioning the stationary side electronic components and the stationary side coil for the maximum nominal current $I_{1,hf_{max}}$.

However, if a design is to dimensioned for a wireless power transmission system having a doubled load voltage level of $U_{2,dc} = 2V$ while maintaining performance level, e.g., airgap variation and equivalently $L_m$ variation the same system design parameters are not applicable because

$$I_{1,hf_{max}}(2V) = \frac{\frac{2 \cdot \sqrt{2} \cdot 2 \cdot U_{2,dc}}{\pi}}{\omega \cdot L_{m\_min}} = \frac{\frac{2 \cdot \sqrt{2} \cdot 2 \cdot V}{\pi}}{\omega \cdot L_{m\_min}}.$$

This implies a doubling of the maximum high frequency current at the stationary side as a function of the mobile side load voltage at the stationary side according to

$$I_{1,hf_{max}}(2V) = 2 \cdot I_{1,hf_{max}}(V).$$

In conclusion, the implication would be to double the current ratings for the stationary side electronics and stationary side coils leading to increased system costs and component effort.

However, even considering the use of a coil set with higher coupling or main inductance $L_m$, then doubling the main inductance $L_m$ would imply a maximum high frequency stationary current according to

$$I_{1,hf_{max}}(2V, 2L_{m_{min}}) = \frac{\frac{2 \cdot \sqrt{2} \cdot 2 \cdot V}{\pi}}{\omega \cdot 2 \cdot L_{m_{min}}} = I_{1,hf_{max}}(V, L_{m_{min}}).$$

Further, doubling the main inductance $L_m$ can only be achieved by increasing the size or the amount of constructive components like ferrite, copper, etc. of the coil systems which also leads to an increase in cost.

In view if the above and explained in the following, the present invention overcomes the design challenges indicated to above by providing wireless power transfer systems having capability to supply a wide range of load voltages at low product implementation costs.

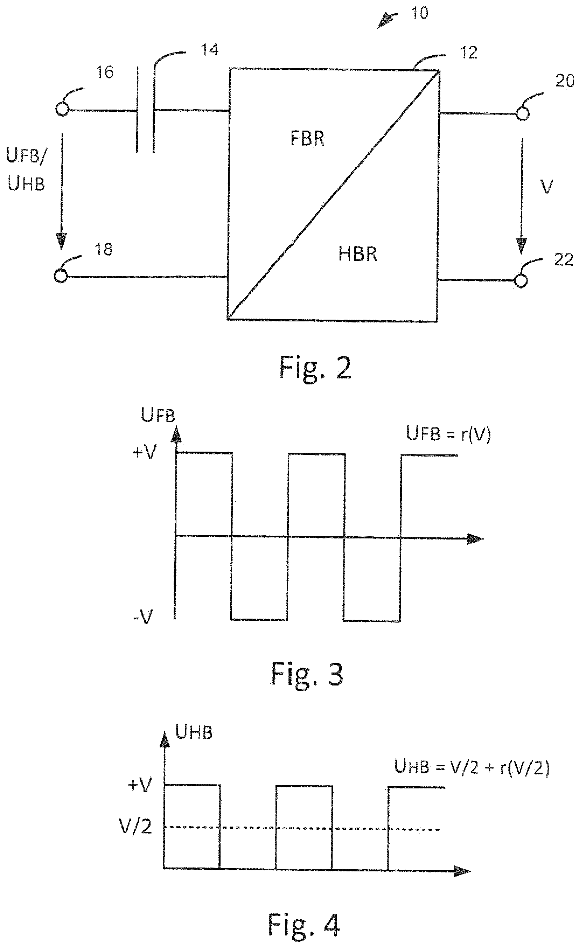

Fig. 2 shows a schematic of a mobile side rectifying module 10 according to the present invention.

As shown in Fig. 2, mobile side rectifying module 10 according to the present invention comprises an adaptive mobile side rectifying circuit 12 and a capacitor 14 connected in series between an input terminal of the mobile side rectifying module 10 and the adaptive mobile side rectifying circuit 12.

It should be noted that according to the present invention the capacitor 14 may also be realized by a mobile side compensation capacitor, if available.

Operatively, the adaptive mobile side rectifying circuit 12 is adapted to operate according to a specific and controlled rectifying mode, e.g., a full bridge rectifying mode or half bridge rectifying mode.

Further operatively, the capacitor 14 is adapted to filter a mobile side DC voltage signal component $U_R$ pending at the input side of the adaptive mobile side rectifying circuit for generation of an input voltage $U_{FB}$ or $U_{HB}$ pending the input terminals 16 and 18 of the mobile side rectifying module 10.

Fig. 3 shows a voltage $U_{FB}$ at the input terminals 16, 18 of the mobile side rectifying module 10 upon operation thereof in the full bride rectifying mode.

As shown in Fig. 3, when the adaptive mobile side rectifying circuit 12 is operating in the full bride rectifying mode then the voltage $U_{FB}$ at the input terminals 16, 18 of the mobile side rectifying module 10 is a rectangle function $U_{FB} = r(V)$ oscillating with amplitude V around a zero voltage.

Further, the voltage $U_{FB}$ is equal to the voltage $U_R$ pending at the input side of the adaptive mobile side rectifying circuit 12 as the capacitor 14 has a high pass filter functionality for the oscillating mobile side AC voltage processed by the adaptive mobile side rectifying circuit 12.

Fig. 4 shows a voltage $U_{HB}$ at the input side of the mobile side rectifying module upon operation hereof in the half bride rectifying mode.

As shown in Fig. 4, when the adaptive mobile side rectifying circuit 12 is operating in the half bride rectifying mode then the voltage $U_R$ at the input side adaptive mobile side rectifying circuit 12 is a rectangle function $U_R = r(V/2)+V/2$ oscillating with amplitude V/2 around a voltage V/2.

Further, the capacitor 14 filters the DC component V/2 of the rectangle function $U_R$. This excitation of the resonant circuit is equivalent to an excitation with a rectangular form $U_{HB} = r(V/2)$, i.e., a rectangle function oscillating at V/2 around a zero voltage.

From the above, assuming that the load voltage at output terminals 20, 22 is doubled from V to 2 V that in the half bridge rectifying mode of the adaptive mobile side rectifying circuit 12 the voltage $U_{HB}$ is identical to the voltage $U_{FB}$ for the load voltage V.

Thus, even if load voltage level is doubled the behavior at the input terminals 16, 18 of the mobile side rectifying module 10 is identical. To put it differently, the input impedance Z of the mobile side rectifying module 10 is invariant against a doubling of the load voltage level through change of the rectifying mode from full bridge mode for a load volage level of V to a half bridge rectifying mode for a load voltage level of 2V.

Further, as the input impedance Z of the mobile side rectifying module 10 is invariant against a doubling of the load voltage level any circuitry to the left of the input terminals 16, 18 of the mobile side rectifying module is of a one-design fits all type with respect to different load voltage levels.

To put it differently, for both load voltage levels the complete wireless power transmission system design can remain the same as the high frequency AC current and AC-part of the voltages $U_{FB}$ and $U_{HB}$ are the same when operating the rectifier in a full bridge rectifying mode with a battery voltage V or in a half bridge rectifying mode with a battery voltage 2V. In both cases, the peak -to-peak mobile HF-voltage $U_{2,hf}$ will remain the same and thus

$$I_{1,hf_{max}}(V)\_full\ bridge = I_{1,hf_{max}}(2V)\_half\ bridge.$$

In conclusion, the present invention enables avoidance of unnecessary over dimensioning of circuit components and achieves significant manufacturing cost advantages through use of an adaptive mobile side rectifying circuit 12.

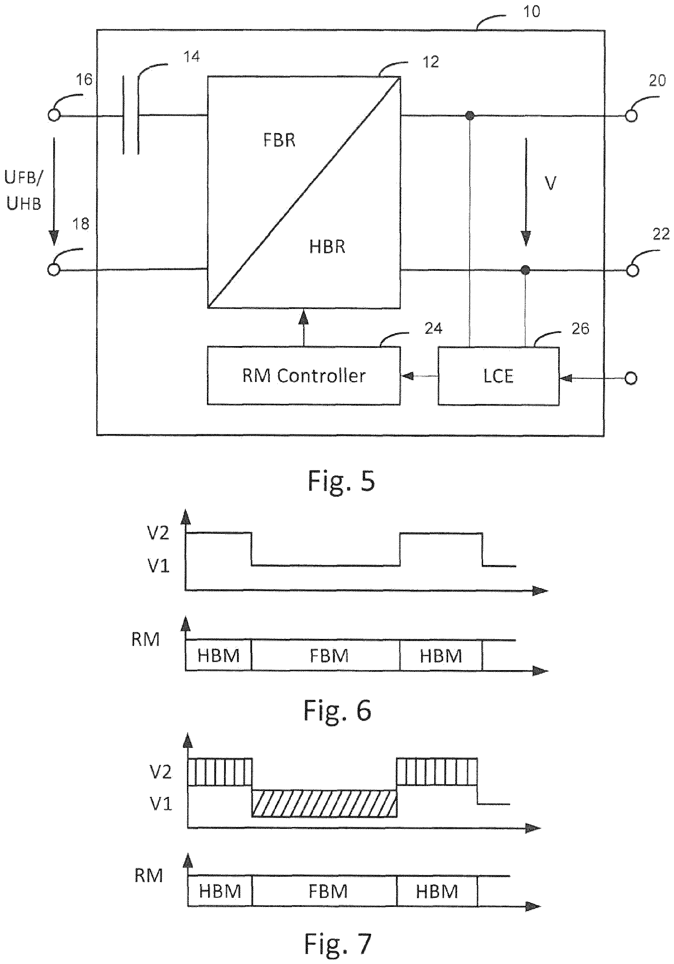

Fig. 5 shows a further detailed schematic diagram of the mobile side rectifying module 10 according to the present invention.

As shown in Fig. 5, the mobile side rectifier module 10 comprises the adaptive mobile side rectifying circuit 12 and the capacitor 14. As the elements have already been explained above, related description will not be repeated.

As shown in Fig. 5, the mobile side rectifier module 10 comprises a rectifying mode controller 24 and a load characteristic evaluation circuit 26.

It should be noted that according to the present invention there is no restriction regarding the use of different load voltage levels. Generally, the load voltage levels may be selected freely, e.g., according to a first load voltage level or a second load voltage level such that the second load voltage level is higher than the first load voltage level.

Then, operatively the rectifying mode controller 24 is adapted to switch the adaptive rectifying mode of the adaptive mobile side rectifying circuit 12 to the full bridge rectifying mode when the mobile side rectifying module 10 is to supply the mobile DC load voltage at the first load voltage level.

Further operatively, the rectifying mode controller 24 is adapted to switch the adaptive rectifying mode of the adaptive mobile side rectifying circuit 12 to the half bridge rectifying mode when the mobile side rectifying module 10 is to supply the mobile DC load voltage at the second load voltage level.

Fig. 6 shows a change of the mobile side rectifying mode over time in relation to a change of a mobile side load voltage from a higher load voltage value $V_2$ to a lower load voltage value $V_1$ and vice versa.

As shown in Fig. 6, according to the present invention there is no restriction on the selection of the higher load voltage value $V_2$ to a lower load voltage value $V_1$. E.g., it is not necessary that the higher load voltage value $V_2$ is any multiple of the lower load voltage value $V_1$.

As shown in Fig. 6, according to the present invention there is also no restriction regarding the timing for change of operation between the full bridge rectifying mode and the half bridge rectifying mode. The only aspect having an impact thereon is the characteristic of the load and related specified load voltage level.

Fig. 7 shows further aspects for a change of the mobile side rectifying mode over time in relation to a change of a mobile side load voltage from a higher load voltage value $V_2$ to a lower load voltage value $V_1$ and vice versa.

As shown in Fig. 7, according to the present invention the higher voltage value $V_2$ may be selected from a higher load voltage range and the lower load voltage value $V_1$ may be selected from a lower load voltage range. Here, according to the present invention there is also covered a scenario where the higher load voltage range and the lower load voltage level only differ partially, i.e., have a certain overlapping range.

To be more specific, e.g., assuming the load to be a 24 V battery then in the full bridge rectifying mode the power may be selected to P=30V*40A=1200W. Another example would be a 48 V battery operated in the half bridge mode at a power of P = 60V*20A = 1200W. Yet another example would be a XY V battery in the half bridge mode at a power of P = 40V*20A = 800W.

Generally, for the case illustrated in Fig. 7 it may be assumed that the design of the wireless power transmission system is to fit maximum mobile side DC voltage level of $max \{V1, V2/2\}$. Even if no multiple relationship applies to the voltage levels of e $V_1$ and $V_2$ the buffer to be designed in relates to $|V2/2 - V1|$ and thus is cleary much lower than a buffer to be designed in for $|V2 - V1|$.

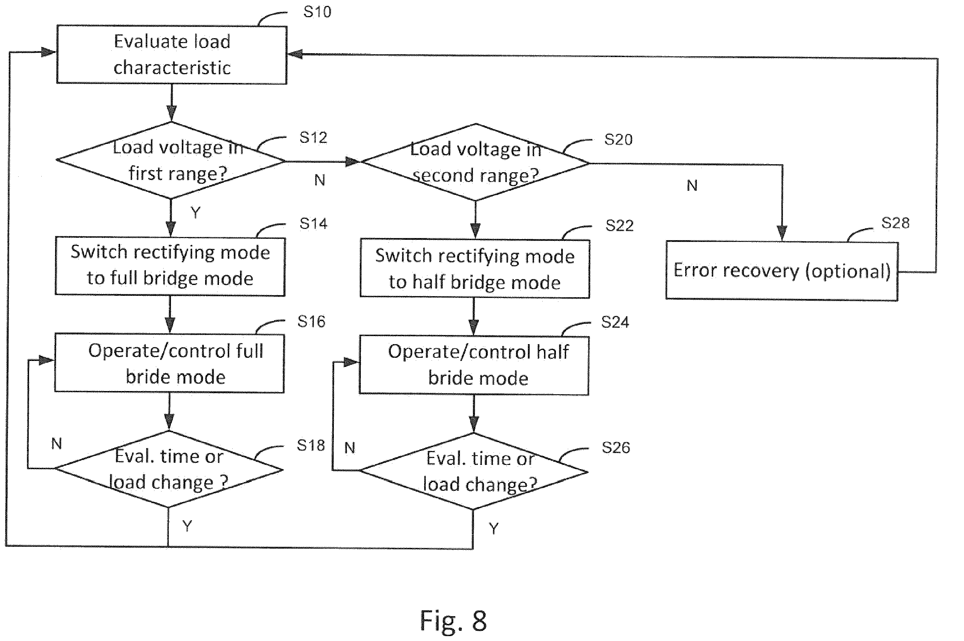

Fig. 8 shows a flowchart of operation for the mobile side rectifying module 10 shown in Fig. 5.

As shown in Fig. 8, in a step S10, operatively being executed by the load characteristic evaluation circuit 26, a load characteristic or a change of the load characteristic is determined.

Preferably, the step S10 is executed by measuring a DC load voltage according to a predetermined evaluation timing scheme or by receipt of an instantaneous load characteristic change indication. Here, the predetermined evaluation timing scheme may be a periodic timing scheme, a non-periodic timing scheme, or initiated according to operative context related conditions. Yet another option would be that the mobile side load itself provides the indication towards a change of load characteristics.

As shown in Fig. 8, in a step S12, operatively being executed by the rectifying mode controller 24, it is checked whether the load voltage level is in the first, lower load voltage range.

As shown in Fig. 8, if the interrogation in step S12 is affirmative there follows a step S14, operatively being executed by the rectifying mode controller 24, to switch the rectifying mode of the adaptive mobile side rectifying circuit 12 to the full bridge rectifying mode, if this is not yet the case.

As shown in Fig. 8, subsequent to the step S14 there follows a step S16, operatively being executed by the rectifying mode controller 24, to operate/control the adaptive mobile side rectifying circuit 12 in the full bridge rectifying mode.

As shown in Fig. 8, subsequent to the step S16 there follows a step S18, operatively being executed by the load characteristic evaluation circuit 26, to reconsider characteristics of the load and necessity of a change of the rectifying mode. If a change of the rectifying mode is not necessary the flow of operation branches back to step S16 and otherwise to step S10.

As shown in Fig. 8, should the interrogation in step S12 indicate that the load voltage level is outside the first load voltage range then follows a step S20, operatively being executed by the rectifying mode controller 24, to check whether the load voltage level is in the second, higher load voltage range.

As shown in Fig. 8, if the interrogation in step S20 is affirmative there follows a step S22, operatively being executed by the rectifying mode controller 24, to switch the rectifying mode of the adaptive mobile side rectifying circuit 12 to the half bridge rectifying mode, if this is not yet the case.

As shown in Fig. 8, subsequent to the step S22 there follows a step S24, operatively being executed by the rectifying mode controller 24, to operate/control the adaptive mobile side rectifying circuit 12 in the half bridge rectifying mode.

As shown in Fig. 8, subsequent to the step S24 there follows a step S26, operatively being executed by the load characteristic evaluation circuit 26, to reconsider characteristics of the load and necessity of a change of the rectifying mode. If a change of the rectifying mode is not necessary the flow of operation branches back to step S24 and otherwise to step S10.

As shown in Fig. 8, should the interrogation in step S20 indicate that the load voltage level is outside the first load voltage range and outside the second load voltage range then there may follow an optional step S28, operatively under control of the rectifying mode controller 24, to check why the load voltage level is outside specified load voltage ranges and to achieve error recovery.

While above, the present invention has been explained with respect to the underlying technical insights and concepts in the following more specific examples for the realization of the adaptive mobile side rectification circuit 12 will be given.

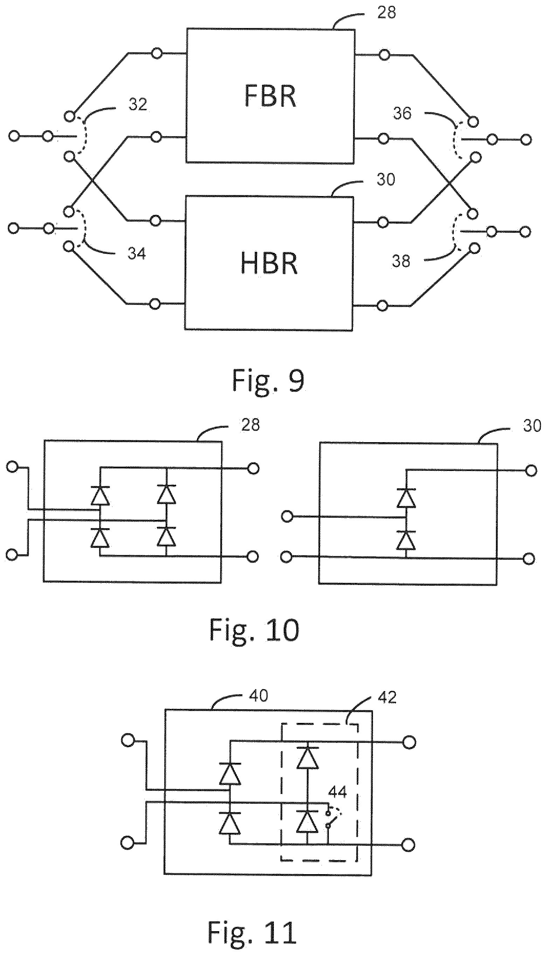

Fig. 9 shows a schematic diagram of a first adaptive mobile side rectifying circuit adapted to operate according to full bridge rectifying mode or a half bridge rectifying mode.

As shown in Fig. 9, the adaptive mobile side rectifying circuit 12 may be set up from a dedicated uncontrolled full bridge rectifying circuit 28 and a dedicated uncontrolled half bridge rectifying circuit 30.

As shown in Fig. 9, the dedicated uncontrolled full bridge rectifying circuit 28 and the dedicated uncontrolled half bridge rectifying circuit 30 are connected in parallel via a first switching element 32, a second switching element 34, a third switching element 36, and a fourth switching element 38.

Operatively, the rectifying mode controller 24 is adapted to switch the rectifying mode to the full bride rectifying mode by controlling the first to fourth switching elements 32 to 38 for activation of the dedicated uncontrolled full bridge rectifying circuit 28.

Further operatively, the rectifying mode controller 24 is adapted to switch the rectifying mode to the half bridge rectifying mode by controlling the first to fourth switching elements 32 to 38 for activation of the dedicated uncontrolled half bridge rectifying circuit 30.

Fig. 10 shows further detailed schematic diagrams of a dedicated full bridge rectifying circuit 28 and of a dedicated half bridge rectifying circuit 30 for application in the first adaptive mobile side rectifying 12 circuit shown in Fig. 9.

As shown in Fig. 10, the dedicated full bridge rectifying circuit 28 may be realized by four diodes connected in full bride circuit topology. Also, the dedicated half bridge rectifying circuit 30 may be realized by two diodes connected in half bride circuit topology.

From the above it should be understood that dedicated circuitry implies a hardware realization without an option to execute external control. As an advantage such approach allows for minimum cost realization of wireless power transmission systems.

Fig. 11 shows a schematic diagram of a second adaptive mobile side rectifying circuit 12 adapted to operate according to a full bridge rectifying mode or a half bridge rectifying mode.

As shown in Fig. 11, the adaptive mobile side rectifying circuit 12 is a full bridge rectifying circuit 40 having a first controllable half bridge 42.

As shown in Fig. 11, in the first controllable half bridge 42 a fifth switching element 44 is connected in series between an upper and a lower rectification element of the first controllable half bridge 42 and a sixth switching element 46 is connected across the lower rectification element of the first controllable half bridge 42.

Operatively, the rectifying mode controller 24 is adapted to switch the rectifying mode to the full bridge rectifying mode by opening the fifth switching element 44 in the first controllable half bridge 42. Further, the rectifying mode controller 24 is adapted to switch the rectifying mode to the half bridge rectifying mode by closing the fifth switching element 44 in the first controllable half bridge 42.

The circuit topology shown in Fig. 11 is beneficial in that only four diodes are necessary to realize both rectifying modes applicable according to the present invention, i.e. the full bridge rectifying mode and the half bridge rectifying mode.

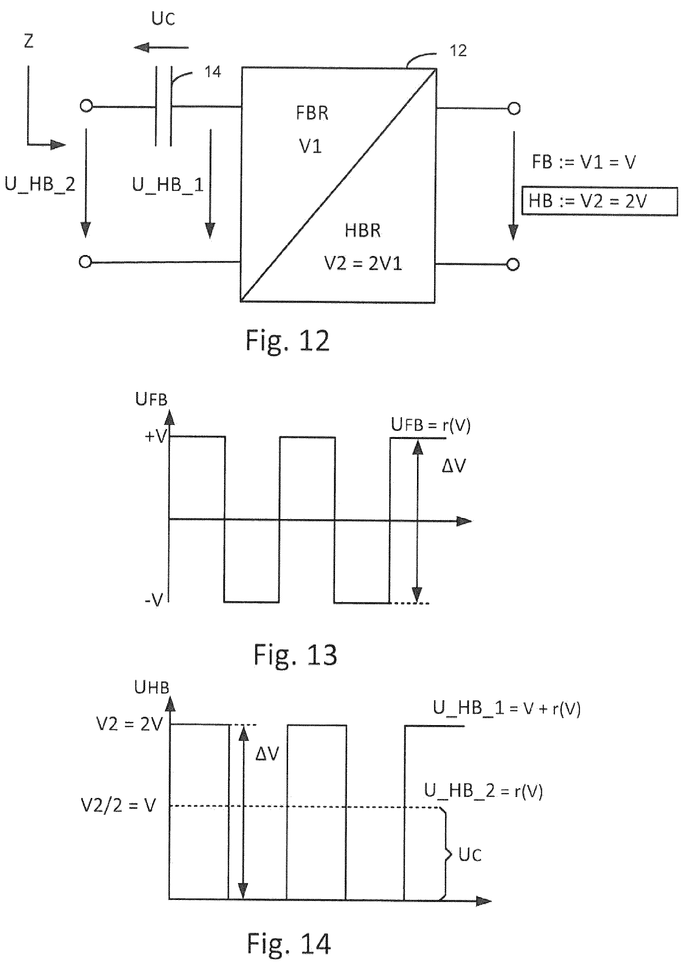

Fig. 12 shows details of operation for the mobile side rectifying module shown in Fig. 9 to 11 when the relation $V_2 = 2V_1$ applies.

Operatively, the adaptive mobile side rectifying circuit 12 is adapted to operate according the full bridge rectifying mode or the half bridge rectifying mode.

Further operatively, the capacitor 14 filters mobile side DC voltage signal U_HB_1 pending at the input side of the adaptive mobile side rectifying circuit 12 for generation of the input voltage $U_{FB}$ or $U_{HB}$ pending the input terminals 16 and 18 of the mobile side rectifying module 10.

Fig. 13 shows a voltage $U_{FB}$ at the input terminals 16, 18 of the mobile side rectifying module 10 upon operation thereof in the full bridge rectifying mode.

As shown in Fig. 3, assuming a load voltage level V1 = V then the voltage $U_{FB}$ pending at the input terminals 16, 18 of the mobile side rectifying module 10 is a rectangle function $U_{FB} = r(V)$ oscillating with amplitude V around a zero voltage and with a peak-to peak difference of $\Delta V$.

Fig. 14 shows a voltage $U_{HB}$ at the input side of the mobile side rectifying module 10 upon operation hereof in the half bride rectifying mode.

As shown in Fig. 14, assuming V2 = 2*V1 in the half bride rectifying mode the voltage $U_{HB\_1}$ at the input side adaptive mobile side rectifying circuit 12 is a rectangle function $U_{HB\_1} = r(V) + V$ oscillating with amplitude V around a voltage V.

Further, assuming that the capacitor 14 filters the DC component V of the rectangle function $U_{HB\_1}$ then the voltage pending at the terminals 16, 18 of the mobile side rectifying module 10 is $U_{HB\_2} = r(V)$, i.e., again rectangle function oscillating at V around a zero voltage and with a peak-to peak difference of $\Delta V$.

From the above, the voltage $U_{HB}$ for a load voltage level V2 = 2*V is identical to the voltage $U_{FB}$ for the load voltage level V. As already outlined above, the input impedance Z of the mobile side rectifying module 10 is invariant against a doubling of the load voltage level through change of the rectifying mode any circuitry to the left of the input terminals 16, 18 of the mobile side rectifying module 10 is of the one-design fits all type with respect to different load voltage levels.

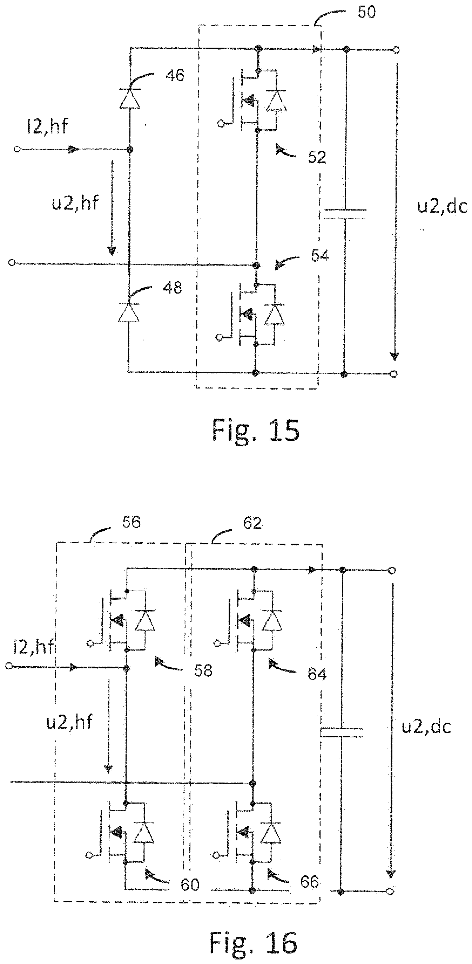

Fig. 15 shows a schematic diagram of a third adaptive mobile side rectifying circuit 12 being an asymmetric half-controlled rectifying circuit adapted to operate according to a full bridge rectifying mode or a half bridge rectifying mode.

As shown in Fig. 15, the adaptive mobile side rectifying circuit 12 is an asymmetric half-controlled rectifying circuit having a dedicated uncontrollable half bridge set-up from two diodes 46, 48 and a second controllable half bridge 50 with an upper sixth switching element 52 and a lower seventh switching element 54.

Operatively, the rectifying mode controller 24 is adapted to switch the rectifying mode to the full bridge rectifying mode by controlling the sixth switching element 52 and the seventh switching element 54 in the second controllable half bridge 50 according to the full bridge rectifying mode.

Here, it should be noted that such control of such full bridge rectifying mode is related to standard functionality and that therefore description thereof is omitted.

Further operatively, the rectifying mode controller 24 is adapted to switch the rectifying mode to the half bridge rectifying mode by constantly switching OFF the upper sixth switching element 52 and by constantly switching ON the lower seventh switching element 54 in the second controllable half bridge 50.

Such switching control achieves a modification of the operation of the asymmetric half-controlled rectifying circuit into the half bridge rectification mode where only the two diodes 46 and 48 are operative for rectification.

Fig. 16 shows a schematic diagram of a fourth adaptive mobile side rectifying circuit 12 being a fully-controlled rectifying circuit adapted to operate according to a full bridge rectifying mode or a half bridge rectifying mode.

As shown in Fig. 16 the adaptive mobile side rectifying circuit 12 is a fully-controlled rectifying circuit having a third controllable half bridge 56 with an upper eighth switching element 58 and a lower ninth switching element 60 and a fourth controllable half bridge 62 with an upper tenth switching element 64 and a lower eleventh switching element 66

According to a first alternative of operating the fully-controlled rectifying circuit shown in Fig. 16 the rectifying mode controller 24 is adapted to switch the rectifying mode to the full bridge rectifying mode by operating the eighth, ninth, tenth, and eleventh switching element of the fully-controlled rectifying circuit according to the full bridge rectifying mode. Here, it should be noted that such control of such full bridge rectifying mode is related to standard functionality and that therefore description thereof is omitted.

According to the first alternative of operating the fully-controlled rectifying circuit the rectifying mode controller 24 is adapted to switch the rectifying mode to the half bridge rectifying mode by constantly switching OFF the upper eighth switching element 58 and by constantly switching ON the lower ninth switching element 60 in the third controllable half bridge 56 or vice versa while controlling the tenth switching element 64 and the eleventh switching element 66 in the fourth controllable half bridge 62 according to the half bridge rectifying mode.

Here, it should be noted that such control of such half bridge rectifying mode is related to standard functionality and that therefore description thereof is omitted.

According to a second alternative of operating the fully-controlled rectifying circuit the rectifying mode controller 24 is adapted to switch the rectifying mode to switch the rectifying mode to the half bridge rectifying mode by constantly switching OFF the upper tenth switching 64 and by constantly switching ON the lower eleventh switching element 68 or vice versa in the fourth controllable half bridge 64 while controlling the eighth switching element 58 and the ninth switching element 60 in the third controllable half bridge 56 according to the half bridge rectifying mode.

Here, it should be noted that such control of such half bridge rectifying mode is related to standard functionality and that therefore description thereof is omitted.

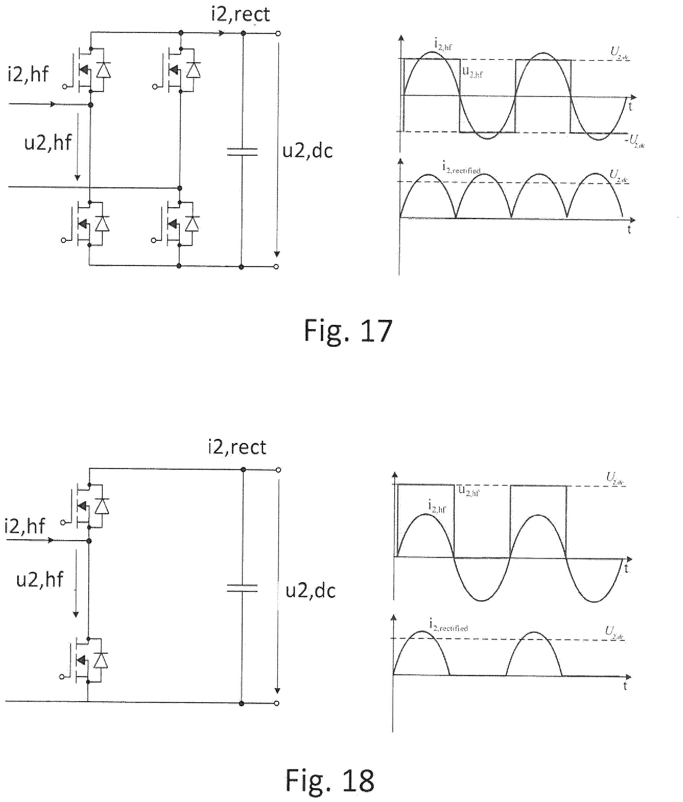

Fig. 17 shows details of operation in the full bridge operation mode for the third and fourth adaptive mobile side rectifying circuit shown in Fig. 15 and Fig. 16.

As shown in Fig. 17, in the full bridge rectification mode the output of the mobile side rectification module 10 will be a voltage $u_{2,dc}$ reflecting an amplitude of the oscillating rectangular shape AC input voltage $u_{2,hf}$ and a current $i_{2,rect}$ being described as continuous sequence of positive sinus half-waves.

Fig. 18 shows details of operation in the half bridge operation mode for the third and fourth adaptive mobile side rectifying circuit shown in Fig. 15 and Fig. 16.

As shown in Fig. 18, in the half bridge rectification mode the output of the mobile side rectification module 10 will be a voltage $u_{2,dc}$ reflecting again an amplitude of the oscillating rectangular shape AC input voltage $u_{2,hf}$ and a current $i_{2,rect}$ being described as interrupted sequence of positive sinus half-waves.

As shown in Fig. 18, both, the level of the voltage $u_{2,dc}$ as well as the amplitude of the current $i_{2,rect}$ are the same as in the full bridge rectifying mode allowing for use of a same circuitry up to the input of the mobile side rectification module 10.

In conclusion, the present invention adds flexibility to mobile side rectification in a wireless power transmission system by selecting an appropriate mode of rectification as a function of a load voltage level. In conclusion, a main part of the wireless power transmission system is realizable in a one design fits all type thus reducing design effort and overall manufacturing costs.

Further, while above the present invention has been described with reference to the and figures, it should be noted that clearly the present invention may also be implemented using variations and modifications thereof which will be apparent and can be readily made by those skilled in the art without departing from the scope and spirit of the present invention. E.g., functionalities described above may be realized in software, in hardware, or a combination thereof.

Accordingly, it is not intended that the scope of claims appended hereto is limited to the description as set forth herein, but rather that the claims should be construed so as to encompass all features of presentable novelty that preside in the present invention, including all features that would be treated as equivalent thereof by those skilled in the art to which the present invention pertains.

**Claims**

1.  Method of controlling an adaptive mobile side rectifier circuit being operated in a wireless power transmission system for conversion of a mobile AC input voltage into a mobile DC load voltage either at a first load voltage level or at a second load voltage level, wherein the second load voltage level is higher than the first load voltage level, the method comprising:

    a first step switching a rectifying mode of the adaptive mobile side rectifying circuit to a full bridge rectifying mode when the adaptive mobile side rectifying circuit is to supply the mobile DC load voltage at the first load voltage level; and
    a second step of switching the rectifying mode of the adaptive mobile side rectifying circuit to a half bridge rectifying mode when the adaptive mobile side rectifying circuit is to supply the mobile side DC load voltage at the second load voltage level.

2.  Method according to claim 1, wherein the first load voltage level is selected from a first load voltage range and the second load voltage level is selected from a second load voltage range being at least partially different from the first load voltage range.

3.  Method according to claim 1 or 2, comprising a third step of evaluating change of load characteristic over time, preferably by measuring a mobile side DC load voltage according to a predetermined evaluation timing scheme or by receipt of an instantaneous load characteristic change indication from the mobile side load.

4.  Method according to one of the claims 1 to 3, wherein the adaptive mobile side rectifying circuit is set up from a dedicated uncontrolled full bridge rectifying circuit and dedicated uncontrolled half bridge rectifying circuit connected in parallel via first to fourth switching elements; wherein

    the first step of switching the rectifying mode to the full bride rectifying mode is executed through switching of the first to fourth switching elements for activation of the dedicated uncontrolled full bridge rectifying circuit in the full bridge rectifying mode; and wherein
    the second step of switching the rectifying mode to the half bridge rectifying mode is executed through switching the first to fourth switching elements for activation of the dedicated uncontrolled half bridge rectifying circuit in the half bridge rectifying mode.

5.  Method according to one of the claims 1 to 3, wherein the adaptive mobile side rectifying circuit is a full bridge rectifying circuit having a first controllable half bridge such that a fifth switching element is connected across the lower rectification element in the first controllable half bridge; wherein

    the first step of switching the rectifying mode to the full bridge rectifying mode is executed by opening the fifth switching element in the first controllable half bridge; and wherein
    the second step of switching the rectifying mode to the half bridge rectifying mode is executed by closing the fifth switching element in the first controllable half bridge.

6.  Method according to one of the claims 1 to 3, wherein the adaptive mobile side rectifying circuit is an asymmetric half-controlled rectifying circuit having a dedicated uncontrollable half bridge and a second controllable half bridge with an upper sixth switching element and a lower seventh switching element; wherein

    the first step of switching the rectifying mode to the full bridge rectifying mode is executed by operating the sixth switching element and the seventh switching element in the second controllable half bridge according to the full bridge rectifying mode; and wherein
    the second step of switching the rectifying mode to the half bridge rectifying mode is executed by constantly switching OFF the upper sixth switching element and by constantly switching ON the lower seventh switching element or vice versa in the second controllable half bridge.

7. Method according to one of the claims 1 to 3, wherein the adaptive mobile side rectifying circuit is a fully-controlled rectifying circuit having a third controllable half bridge with an upper eighth switching element and a lower ninth switching element and a fourth controllable half bridge with an upper tenth switching element and a lower eleventh switching element; wherein

the first step of switching the rectifying mode to the full bridge rectifying mode is executed by operating the eight, ninth, tenth, and eleventh switching element of the fully-controlled rectifier circuit according to the full bridge rectifying mode; and wherein
the second step of switching the rectifying mode to the half bridge rectifying mode is executed by constantly switching OFF the upper eighth switching element and by constantly switching ON the lower ninth switching element or vice versa in the third controllable half bridge while operating the tenth switching element and the eleventh switching element in the fourth controllable half bridge according to the half bridge rectifying mode; or wherein
the second step of switching the rectifying mode to the half bridge rectifying mode is executed by constantly switching OFF the upper tenth switching element and by constantly switching ON the lower eleventh switching element or vice versa in the fourth controllable half bridge while operating the eighth switching element and the ninth switching element in the third controllable half bridge according to the half bridge rectifying mode.

8. Mobile side rectifying module operated in a wireless power transmission system for conversion of a mobile side input voltage into a mobile DC load voltage either at a first load voltage level or at a second load voltage level, wherein the second load voltage level is higher than the first load voltage level, comprising:

an adaptive mobile side rectifying circuit adapted to operate according to a rectifying mode being either a full bridge rectifying mode or a half bridge rectifying mode; and
a rectifying mode controller adapted to

switch the adaptive rectifying mode of the adaptive mobile side rectifying circuit to the full bridge rectifying mode when the mobile side rectifying module is to supply the mobile DC load voltage at the first load voltage level; and to
switch the adaptive rectifying mode of the adaptive mobile side rectifying circuit to the half bridge rectifying mode when the mobile side rectifying module is to supply the mobile DC load voltage at the second load voltage level.

9. Mobile side rectifying module according to claim 8, wherein the first load voltage level is selected from a first load voltage range and the second load voltage level is selected from a second load voltage range being at least partially different from the first load voltage range.

10. Mobile side rectifying module according to claim 8 or 9, comprising a load characteristic evaluation circuit adapted to evaluate a change of a load characteristic over time, preferably by measuring a DC load voltage according to a predetermined evaluation timing scheme or by receipt of an instantaneous load characteristic change indication from the mobile side load.

11. Mobile side rectifying module according to one of the claims 8 to 10, wherein the adaptive mobile side rectifying circuit is set up from a dedicated uncontrolled full bridge rectifying circuit and dedicated uncontrolled half bridge rectifying circuit connected in parallel via first to fourth switching elements; and wherein

the rectifying mode controller is adapted to
switch the rectifying mode to the full bride rectifying mode by controlling the first to fourth switching elements for activation of the dedicated uncontrolled full bridge rectifying circuit; and to
switch the rectifying mode to the half bridge rectifying mode by controlling the first to fourth switching elements for activation of the dedicated uncontrolled half bridge rectifying circuit.

12. Mobile side rectifying module according to one of the claims 8 to 10, wherein the adaptive mobile side rectifying circuit is a full bridge rectifying circuit having a first controllable half bridge such that a fifth switching element is connected across the lower rectification element of the first controllable half bridge; and wherein

the rectifying mode controller is adapted to
switch the rectifying mode to the full bridge rectifying mode by opening the fifth switching element in the first controllable half bridge; and to
switch the rectifying mode to the half bridge rectifying mode by closing the fifth switching element in the first controllable half bridge.

13. Mobile side rectifying module according to one of the claims 8 to 10, wherein the adaptive mobile side rectifying circuit is an asymmetric half-controlled rectifying circuit having a dedicated uncontrollable half bridge and a second controllable half bridge with an upper sixth switching element and a lower seventh switching element; wherein

the rectifying mode controller is adapted to
switch the rectifying mode to the full bridge rectifying mode by controlling the sixth switching element and the seventh switching element in the second controllable half bridge according to the full bridge rectifying mode; and to
switch the rectifying mode to the half bridge rectifying mode by constantly switching OFF the upper sixth switching element and by constantly switching ON the lower seventh switching element or vice versa in the second controllable half bridge.

14. Mobile side rectifying module according to one of the claims 8 to 10, wherein the adaptive mobile side rectifying circuit is a fully-controlled rectifying circuit having a third controllable half bridge with an upper eighth switching element and a lower ninth switching element and a fourth controllable half bridge with an upper tenth switching element and a lower eleventh switching element; wherein

the rectifying mode controller is adapted to
switch the rectifying mode to the full bridge rectifying mode by operating the eighth, ninth, tenth, and eleventh switching element of the fully-controlled rectifying circuit according to the full bridge rectifying mode; and to
switch the rectifying mode to the half bridge rectifying mode by constantly switching OFF the upper eighth switching element and by constantly switching ON the lower ninth switching element or vice versa in the third controllable half bridge while controlling the tenth switching element and the eleventh switching element in the fourth controllable half bridge according to the half bridge rectifying mode; or to
switch the rectifying mode to the half bridge rectifying mode by constantly switching OFF the upper tenth switching element and by constantly switching ON the lower eleventh switching element or vice versa in the fourth controllable half bridge while controlling the eighth switching element and the ninth switching element in the third controllable half bridge according to the half bridge rectifying mode.

15. Mobile side rectifying module according to one of the claims 8 to 14, comprising a capacitor connected in series between an input terminal of the mobile side rectifying module used for supply of the AC input voltage and an input terminal of the adaptive mobile side rectifying circuit.


**Amended claims in accordance with Rule 137(2) EPC.**

1. Method of controlling an adaptive mobile side rectifying (12) circuit being operated in a wireless power transmission system for conversion of a mobile AC input voltage into a mobile DC load voltage either at a first load voltage level or at a second load voltage level, wherein the second load voltage level is higher than the first load voltage level, the method comprising:

a first step of switching a rectifying mode of the adaptive mobile side rectifying circuit (12) to a full bridge rectifying mode when the adaptive mobile side rectifying circuit (12) is to supply the mobile DC load voltage at the first load voltage level;
a second step of switching the rectifying mode of the adaptive mobile side rectifying circuit (12) to a half bridge rectifying mode when the adaptive mobile side rectifying circuit (12) is to supply the mobile side DC load voltage at the second load voltage level; and
a third step of evaluating change of load characteristic overtime by measuring a mobile side DC load voltage according to a predetermined evaluation timing scheme or by receipt of an instantaneous load characteristic change indication from the mobile side load.

2. Method according to claim 1, wherein the first load voltage level is selected from a first load voltage range and the second load voltage level is selected from a second load voltage range being at least partially different from the first load voltage range.

3. Method according to one of the claims 1 to 2, wherein the adaptive mobile side rectifying circuit (12) is set up from a dedicated uncontrolled full bridge rectifying circuit and dedicated uncontrolled half bridge rectifying circuit connected in parallel via first to fourth switching elements; wherein

the first step of switching the rectifying mode to the full bride rectifying mode is executed through switching of the first to fourth switching elements for activation of the dedicated uncontrolled full bridge rectifying circuit in the full bridge rectifying mode; and wherein
the second step of switching the rectifying mode to the half bridge rectifying mode is executed through switching the first to fourth switching elements for activation of the dedicated uncontrolled half bridge rectifying circuit in the half bridge rectifying mode.

4. Method according to one of the claims 1 to 2, wherein the adaptive mobile side rectifying circuit (12) is a full bridge rectifying circuit having a first controllable half bridge such that a fifth switching element is connected across the lower rectification element in the first controllable half bridge; wherein

the first step of switching the rectifying mode to the full bridge rectifying mode is executed by opening the fifth switching element in the first controllable half bridge; and wherein
the second step of switching the rectifying mode to the half bridge rectifying mode is executed by closing the fifth switching element in the first controllable half bridge.

5. Method according to one of the claims 1 to 2, wherein the adaptive mobile side rectifying circuit (12) is an asymmetric half-controlled rectifying circuit having a dedicated uncontrollable half bridge and a second controllable half bridge with an upper sixth switching element and a lower seventh switching element; wherein

the first step of switching the rectifying mode to the full bridge rectifying mode is executed by operating the sixth switching element and the seventh switching element in the second controllable half bridge according to the full bridge rectifying mode; and wherein
the second step of switching the rectifying mode to the half bridge rectifying mode is executed by constantly switching OFF the upper sixth switching element and by constantly switching ON the lower seventh switching element or vice versa in the second controllable half bridge.

6. Method according to one of the claims 1 to 2, wherein the adaptive mobile side rectifying circuit (12) is a fully-controlled rectifying circuit having a third controllable half bridge with an upper eighth switching element and a lower ninth switching element and a fourth controllable half bridge with an upper tenth switching element and a lower eleventh switching element; wherein

the first step of switching the rectifying mode to the full bridge rectifying mode is executed by operating the eight, ninth, tenth, and eleventh switching element of the fully-controlled rectifing circuit according to the full bridge rectifying mode; and wherein
the second step of switching the rectifying mode to the half bridge rectifying mode is executed by constantly switching OFF the upper eighth switching element and by constantly switching ON the lower ninth switching element or vice versa in the third controllable half bridge while operating the tenth switching element and the eleventh switching element in the fourth controllable half bridge according to the half bridge rectifying mode; or wherein
the second step of switching the rectifying mode to the half bridge rectifying mode is executed by constantly switching OFF the upper tenth switching element and by constantly switching ON the lower eleventh switching element or vice versa in the fourth controllable half bridge while operating the eighth switching element and the ninth switching element in the third controllable half bridge according to the half bridge rectifying mode.

7. Mobile side rectifying module operated in a wireless power transmission system for conversion of a mobile side input voltage into a mobile DC load voltage either at a first load voltage level or at a second load voltage level, wherein the second load voltage level is higher than the first load voltage level, comprising:

an adaptive mobile side rectifying circuit (12) adapted to operate according to a rectifying mode being either a full bridge rectifying mode or a half bridge rectifying mode;

a rectifying mode controller adapted to

switch the adaptive rectifying mode of the adaptive mobile side rectifying circuit (12) to the full bridge rectifying mode when the mobile side rectifying module is to supply the mobile DC load voltage at the first load voltage level; and to
switch the adaptive rectifying mode of the adaptive mobile side rectifying circuit (12) to the half bridge rectifying mode when the mobile side rectifying module is to supply the mobile DC load voltage at the second load voltage level; and

a load characteristic evaluation circuit adapted to evaluate a change of a load characteristic over time by measuring a DC load voltage according to a predetermined evaluation timing scheme or by receipt of an instantaneous load characteristic change indication from the mobile side load.

8. Mobile side rectifying module according to claim 7, wherein the first load voltage level is selected from a first load voltage range and the second load voltage level is selected from a second load voltage range being at least partially different from the first load voltage range.

9. Mobile side rectifying module according to claim 7 or 8, wherein the adaptive mobile side rectifying circuit (12) is set up from a dedicated uncontrolled full bridge rectifying circuit and dedicated uncontrolled half bridge rectifying circuit connected in parallel via first to fourth switching elements; and wherein

the rectifying mode controller is adapted to
switch the rectifying mode to the full bride rectifying mode by controlling the first to fourth switching elements for activation of the dedicated uncontrolled full bridge rectifying circuit; and to
switch the rectifying mode to the half bridge rectifying mode by controlling the first to fourth switching elements for activation of the dedicated uncontrolled half bridge rectifying circuit.

10. Mobile side rectifying module according to claim 7 or 8, wherein the adaptive mobile side rectifying circuit (12) is a full bridge rectifying circuit having a first controllable half bridge such that a fifth switching element is connected across the lower rectification element of the first controllable half bridge; and wherein

the rectifying mode controller is adapted to
switch the rectifying mode to the full bridge rectifying mode by opening the fifth switching element in the first controllable half bridge; and to
switch the rectifying mode to the half bridge rectifying mode by closing the fifth switching element in the first controllable half bridge.

11. Mobile side rectifying module according to claim 7 or 8, wherein the adaptive mobile side rectifying circuit (12) is an asymmetric half-controlled rectifying circuit having a dedicated uncontrollable half bridge and a second controllable half bridge with an upper sixth switching element and a lower seventh switching element; wherein

the rectifying mode controller is adapted to
switch the rectifying mode to the full bridge rectifying mode by controlling the sixth switching element and the seventh switching element in the second controllable half bridge according to the full bridge rectifying mode; and to
switch the rectifying mode to the half bridge rectifying mode by constantly switching OFF the upper sixth switching element and by constantly switching ON the lower seventh switching element or vice versa in the second controllable half bridge.

12. Mobile side rectifying module according to claim 7 or 8, wherein the adaptive mobile side rectifying circuit (12) is a fully-controlled rectifying circuit having a third controllable half bridge with an upper eighth switching element and a lower ninth switching element and a fourth controllable half bridge with an upper tenth switching element and a lower eleventh switching element; wherein

the rectifying mode controller is adapted to
switch the rectifying mode to the full bridge rectifying mode by operating the eighth, ninth, tenth, and eleventh switching element of the fully-controlled rectifying circuit according to the full bridge rectifying mode; and to
switch the rectifying mode to the half bridge rectifying mode by constantly switching OFF the upper eighth switching element and by constantly switching ON the lower ninth switching element or vice versa in the third controllable half bridge while controlling the tenth switching element and the eleventh switching element in the fourth controllable half bridge according to the half bridge rectifying mode; or to

switch the rectifying mode to the half bridge rectifying mode by constantly switching OFF the upper tenth switching element and by constantly switching ON the lower eleventh switching element or vice versa in the fourth controllable half bridge while controlling the eighth switching element and the ninth switching element in the third controllable half bridge according to the half bridge rectifying mode.

13. Mobile side rectifying module according to one of the claims 7 to 12, comprising a capacitor connected in series between an input terminal of the mobile side rectifying module used for supply of the AC input voltage and an input terminal of the adaptive mobile side rectifying circuit (12).

Fig. 1

10

16          14                    12          20

$$U_{FB}/ \atop U_{HB}$$          FBR          V

18                    HBR          22

## Fig. 2

$U_{FB}$

+V                    $U_{FB} = r(V)$

-V

## Fig. 3

$U_{HB}$

+V                    $U_{HB} = V/2 + r(V/2)$

V/2

## Fig. 4

Fig. 5

Fig. 6

Fig. 7

S10 Evaluate load characteristic

S12 Load voltage in first range?

S20 Load voltage in second range?

S14 Switch rectifying mode to full bridge mode

S22 Switch rectifying mode to half bridge mode

S28 Error recovery (optional)

S16 Operate/control full bride mode

S24 Operate/control half bride mode

S18 Eval. time or load change ?

S26 Eval. time or load change?

Fig. 8

28

FBR

32

36

34

HBR

30

38

Fig. 9

28

30

Fig. 10

40

42

44

Fig. 11

UC

Z

FBR
V1

14

12

FB := V1 = V

HB := V2 = 2V

U_HB_2

U_HB_1

HBR

V2 = 2V1

## Fig. 12

UFB

+V

UFB = r(V)

ΔV

-V

## Fig. 13

UHB

V2 = 2V

U_HB_1 = V + r(V)

ΔV

V2/2 = V

U_HB_2 = r(V)

UC

## Fig. 14

Fig. 15

Fig. 16

Fig. 17

Fig. 18

Europäisches
Patentamt

European
Patent Office

Office européen
des brevets

# EUROPEAN SEARCH REPORT

Application Number

EP 23 15 2435

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 215 393 B1 (WITRICITY CORP [US]) 19 February 2020 (2020-02-19)<br><br>* paragraphs [0001], [0055] - [0057]; figures 7-9 *<br>----- | 1-4, 6-11, 13-15 | INV.<br>H02J50/12<br>H02J7/00<br>H02M7/219<br>H02M7/797 |
| X | US 2022/320905 A1 (CUI KAIYONG [CN] ET AL) 6 October 2022 (2022-10-06)<br><br>* paragraphs [0041], [0052], [0053]; figure 2 *<br>----- | 1-4, 6-11, 13-15 | |
| X | US 2018/358844 A1 (YU FENG [CN] ET AL) 13 December 2018 (2018-12-13) | 1-3,5, 8-10,12, 15 | |
| A | * paragraph [0009]; figures 1-4 *<br>----- | 4,11 | |
| A | US 2017/063251 A1 (YE LIMING [US] ET AL) 2 March 2017 (2017-03-02)<br>* figures 11a-11e *<br>----- | 2,9 | |

**TECHNICAL FIELDS SEARCHED (IPC)**

H02J
B60L
H04B
H01F

The present search report has been drawn up for all claims

| Place of search | Date of completion of the search | Examiner |
|---|---|---|
| Munich | 9 June 2023 | Varela Fraile, Pablo |

EPO FORM 1503 03.82 (P04C01)

## ANNEX TO THE EUROPEAN SEARCH REPORT
## ON EUROPEAN PATENT APPLICATION NO.

EP 23 15 2435

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2023

| Patent document cited in search report | | Publication date | Patent family member(s) | | Publication date |
|---|---|---|---|---|---|
| EP 3215393 | B1 | 19-02-2020 | CN | 107107777 A | 29-08-2017 |
| | | | EP | 3215393 A1 | 13-09-2017 |
| | | | JP | 6602868 B2 | 06-11-2019 |
| | | | JP | 2018503343 A | 01-02-2018 |
| | | | US | 2016176300 A1 | 23-06-2016 |
| | | | WO | 2016099685 A1 | 23-06-2016 |
| US 2022320905 | A1 | 06-10-2022 | CN | 113113974 A | 13-07-2021 |
| | | | CN | 114221448 A | 22-03-2022 |
| | | | KR | 20220136104 A | 07-10-2022 |
| | | | US | 2022320905 A1 | 06-10-2022 |
| | | | US | 2022320907 A1 | 06-10-2022 |
| US 2018358844 | A1 | 13-12-2018 | CN | 107147199 A | 08-09-2017 |
| | | | US | 2018358844 A1 | 13-12-2018 |
| US 2017063251 | A1 | 02-03-2017 | US | 2017063251 A1 | 02-03-2017 |
| | | | US | 2018234022 A1 | 16-08-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011285349 A1